# EUROPÄISCHE PATENTSCHRIFT

(11) **EP 0 417 350 B1**
(45) Veröffentlichungstag und Bekanntmachung des Hinweises auf die Patenterteilung: **01.06.1994**
(21) Anmeldenummer: 89118947.4
(22) Anmeldetag: 12.10.1989
(51) Int. Cl.: B60R 21/32, B60R 16/02, H01R 35/02

(54) **Stromleitungsverbinder zur Überbrückung von Leiterunterbrechungen zwischen gegeneinander drehbaren Teilen**
Electrical connector device to bridge line interruptions between two relatively rotating parts
Dispositif de connexion électrique pour relier deux pièces en rotation relative

(30) Priorität: 12.09.1989 DE 3930494
(43) Veröffentlichungstag der Anmeldung: 20.03.1991
(73) Patentinhaber: Petri AG, D-63704 Aschaffenburg (DE)
(72) Erfinder: Banfelder, Elmar, D-8751 Sulzbach (DE)
(74) Vertreter: Eyer, Eckhardt Philipp, Dipl.-Ing.

(56) Entgegenhaltungen:
- EP-A- 0 243 047
- GB-A- 983 411
- US-A- 4 722 690

## Beschreibung

Die Erfindung geht aus von einem Stromleitungsverbinder gemäß dem Oberbegriff des Patentanspruches 1.

Ein Stromleitungsverbinder dieser Art ist beispielsweise aus der US-A-4 722 690 bekannt geworden. Sie werden insbesondere zur Herstellung einer elektrischen Verbindung zwischen einer Stromquelle und der in der Lenkradschüssel angeordneten Gassack-Aufprall-Schutzeinrichtung von Kraftfahrzeugen eingesetzt. Hierbei weist das im Gehäuseraum angeordnete Leiterband eine solche Länge auf, daß sie dem beidseitig etwa drei Umdrehungen betragenden Lenkradausschlag zu folgen vermag, wobei sich die Feder während des Lenkradausschlages aus einer mittleren Lage in der einen Richtung bis zur Anlage an dem stationären Gehäuse nach außen aufweitet und in der anderen Richtung bis zur Anlage an dem Rotor nach innen zusammenzieht.

Die bekannten Stromleitungsverbinder haben sich in der Praxis im wesentlichen gut bewährt, es wird jedoch als ein Nachteil angesehen, daß das in dem Gehäuse geführte Leiterband einerseits bei der normalen Lenkradbewegung Kratzgeräusche und andererseits bei plötzlichen starken Erschütterungen - etwa in Kurven oder bei Fahren auf unebenem Gelände - starke Klappergeräusche abgeben, die vorwiegend durch das Aufeinanderschlagen der Windungen des Leiterbandes aneinander verursacht werden.

Der vorliegenden Erfindung liegt als Aufgabe die Schaffung eines Stromleitungsverbinders zugrunde, mit dessen Hilfe auf eine einfache Weise eine Geräuschentwicklung der oben genannten Art vermindert werden kann. Diese Aufgabe wird mit einem Stromleitungsverbinder mit den im Patentanspruch 1 wiedergegebenen Merkmalen gelöst.

Durch die Erfindung ist ein Stromleitungsverbinder geschaffen, dessen Geräuschentwicklung vermindert ist. Das Leiterband ist zwischen textilen Lagen fest geführt, so daß das Schlaggeräusche verursachende Aufeinanderschlagen der Wicklungen verminhert ist oder allenfalls in Extremsituationen auftreten kann. Hierbei hat sich in überraschender Weise gezeigt, daß ungeachtet der engen Führung des Leiterbandes mit seinen Kanten auf der Beschichtungslage auch über lange Zeiträume ein - ursprünglich befürchtetes - Abreiben des Textilvlieses und sich hieraus ergebende funktionelle Beeinträchtigungen nicht zu befürchten sind.

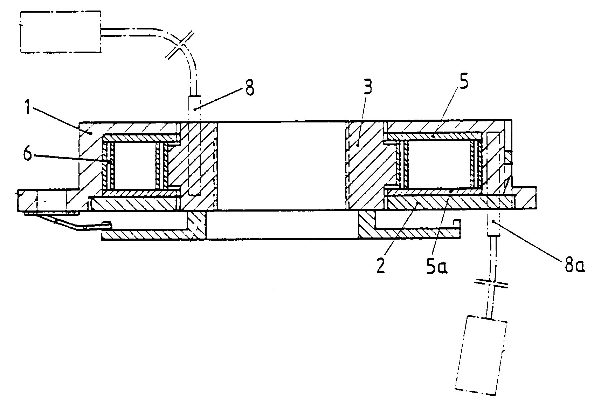

Weitere Ausführungsformen und Vorteile ergeben sich aus der nachfolgenden Beschreibung, in der die Erfindung anhand der beiliegenden Zeichnung beispielsweise erläutert ist.

Der in der Zeichnung wiedergegebene Stromleitungsverbinder zur Überbrückung von Leiterunterbrechungen zwischen einer gestellfesten Lenksäule und einem auf der Lenksäule drehbaren Lenkrad besteht aus einem Gehäuse 1 mit Leiterabgang 8a und Deckel 2 als an der Lenksäule befestigbarer Stator sowie einem in dem Gehäuse 1, 2 drehbar gelagerten Rotor 3, der ebenfalls mit einem Leiterabgang 8 versehen ist. Das Gehäuse 1, 2 und der mit dem Lenkrad verbundene Rotor 3 umschließen einen Ringraum, der der Aufnahme eines den Rotor in mehreren Windungen umschlingenden, in den Leiterabgängen 8, 8a endenden Leiterbandes 6 dient. Hierbei können die Leiterabgänge von einem Kontaktstift gebildet sein, an dem die Enden der Wickelfeder befestigt sind, es kann jedoch auch das Leiterband 6 selbst - etwa durch Umspritzen - durch den Rotor bezw. das Gehäuse geführt sein, so das das Leiterband selbst die Leiterabgänge bildet. Der Boden des Gehäuses 1 und der Deckel 2 sind jeweils auf der inneren, d.h. dem isolierten Leiterband zugewandten Seite mit einer Beschichtung aus einem textilen Dämmstoff 5, 5a versehen, der von einem Poly-Äthylen-Faser-Vlies oder einem anderen geeigneten Material bestehen kann, das mit einem Bindemittel zu einem isolierenden Filz hoher Abriebfestigkeit verdichtet ist. Die Filzlage kann in beliebiger bekannter Weise, beispielsweise mittels einer Selbstklebebeschichtung auf dem Boden des Gehäuses 1 bzw. dem Deckel 2 befestigt sein.

## Patentansprüche

1. Stromleitungsverbinder zur Überbrückung von Leiterunterbrechungen zwischen gegeneinander drehbaren Teilen, insbesondere zwischen Lenkrad und Lenksäule, bestehend aus einem mit einem Leiterabgang (8a) versehenen Gehäuse (1) mit Deckel (2) als an der Lenksäule befestigbarer Stator und einem in dem Gehäuse (1, 2) drehbar gelagerten und ebenfalls mit einem Leiterabgang (8) versehenen, mit dem Lenkrad verbundenen Rotor (3), die einen den Rotor umgebenden Ringraum begrenzen, der der Aufnahme eines den Rotor in mehreren Windungen umschlingenden, in den Leiterabgängen (8, 8a) endenden Leiterbandes (6) dient, dadurch gekennzeichnet, daß die dem isolierten Leiterband zugewandten Seiten des Bodens des Gehäuses (1) und des Deckels (2) jeweils mit einer Beschichtung aus einem textilen Dämmstoff (5, 5a) versehen sind.

2. Stromleitungsverbinder nach Anspruch 1, dadurch gekennzeichnet, daß der textile Dämmstoff von einem Poly-Äthylen-Faser-Vlies gebildet ist, das mit einem Bindemittel zu einem isolierenden Filz hoher Abriebfestigkeit verdichtet ist.

3. Stromleitungsverbinder nach Anspruch 2, dadurch gekennzeichnet, daß der Filzbeschichtung mittels einer Selbstklebebeschichtung auf dem Boden des Gehäuses bezw. dem Deckel befestigt ist.

## Claims

1. Connector for current conduction for bridging conductor interruptions between component parts which are rotatable relative to one another, more especially between a steering wheel and steering column, comprising a housing (1), which is provided with a conductor outlet (8a) and a cover (2), the housing and cover serving as a stator mountable on the steering column, and a rotor (3), which is rotatably mounted in the housing (1, 2), is also provided with a conductor outlet (8) and is connected to the steering wheel, the housing and cover defining an annular space, which surrounds the rotor and serves to accommodate a conductor strip (6), which loops around the rotor in a plurality of windings and terminates in the conductor outlets (8, 8a), characterised in that the sides of the base of the housing (1) and of the cover (2) facing the insulated conductor strip are each provided with a covering of textile insulating material (5, 5a).

2. Connector for current conduction according to claim 1, characterised in that the textile insulating material is formed from a polyethylene non-woven fabric, which is compressed with a binding agent to form an insulating felt of high wear-resistance.

3. Connector for current conduction according to claim 2, characterised in that the felt is secured on the base of the housing, or respectively on the cover, by means of a self-adhesive coating.

## Revendications

1. Liaison conductrice de courant, pour établir un pontage électrique sur un conducteur interrompu entre des pièces qui peuvent tourner l'une par rapport à l'autre, en particulier entre un volant et une colonne de direction, se composant d'un boîtier (1) à couvercle (2), muni d'un départ de conducteur (8a) et constituant un stator pouvant être fixé à la colonne de direction, et d'un rotor (3) fixé au volant, monté à rotation dans le boîtier (1, 2) et également muni d'un départ de conducteur (8), le stator et le rotor délimitant un espace annulaire qui entoure le rotor et qui sert à recevoir un ruban conducteur (6) qui est enroulé en plusieurs tours autour du rotor et se termine dans les départs de conducteur (8, 8a), caractérisée en ce que les faces du fond du boîtier (1) et du couvercle (2) dirigées vers le ruban conducteur isolé sont garnies chacune d'un revêtement en un matériau textile isolant (5, 5a).

2. Liaison conductrice de courant selon la revendication 1, caractérisée en ce que le matériau textile isolant est constitué par une nappe de fibres de polyéthylène qui est comprimée avec un liant pour obtenir un feutre isolant ayant une résistance élevée à l'usure.

3. Liaison conductrice de courant selon la revendication 2, caractérisée en ce que le revêtement en feutre est fixé au fond du boîtier ou au couvercle au moyen d'un enduit autocollant.
